# EUROPEAN PATENT SPECIFICATION

(11) **EP 0 427 304 B1**
(45) Date of publication and mention of the grant of the patent: **04.01.1995**
(21) Application number: 90202609.5
(22) Date of filing: 02.10.1990
(51) Int. Cl.: F16H 19/00, E21B 19/22

(54) **Apparatus for longitudinally driving an elongate body**
Einrichtung zum Antreiben eines langgestreckten Körpers in Längsrichtung
Dispositif d'entraînement longitudinal d'un objet allongé

(30) Priority: 07.11.1989 NL 8902747
(43) Date of publication of application: 15.05.1991
(73) Proprietor: FUGRO- MCCLELLAND ENGINEERS B.V., NL-2264 SG Leidschendam (NL)
(72) Inventor: Zuidberg, Herman Maria, NL-2231 VV Rijnsburg (NL)
(74) Representative: Metman, Karel Johannes

(56) References cited:
- CH-A- 561 374
- FR-A- 1 426 898
- FR-A- 1 476 170
- GB-A- 1 351 277
- US-A- 1 716 229
- US-A- 3 331 240
- US-A- 3 866 882

## Description

The invention relates to an apparatus according to the preamble of claims 1 and 2.

In a prior art apparatus (see e.g. US-A-3,331,240 and FR-A-1.476.170) there are provided two wheels disposed on opposite sides of the elongate body to be driven, the wheels engaging to the elongate body with their outer circumference. The wheels are adapted to exert a normal force towards each other and perpendicular to the longitudinal axis of the body so as to clamp the body between the wheels. By exerting a torque on at least one of the wheels a friction force is produced at the position of the contact between the wheels and the elongate body, said friction force being equal to the multiplication of the normal force and the prevailing coefficient of friction.

The effectiveness of the working of this known apparatus is restricted by a number of factors. For instance, the normal force on the body to be driven, if it is hollow, should be smaller than the force which would cause a flattening or compression of the hollow body as a consequence of the existence of a plastical bending force in the portion of the circumference of the body not supported by the wheels. Further the normal force should be smaller than the force which would cause too much permanent deformation of the body or the wheels in the area of contact. This deformation will set-in if the normal stress, that is the normal force per unit area, is too high. In case of a cylindrical body and a wheel having a flat circumference the contact area will only be a point when a low normal stress exists, and between such a wheel and a square body there will be an area of line contact. Both areas will expand to a slightly larger area as a consequence of elastic deformation of both surfaces. It is indeed possible to enlarge the contact area with bodies having a curved cross-section, and consequently to increase the admissible normal force, by adapting the surface of the wheel circumference to the cross-section of the body. However, as a result thereof differences in speed will set-in on the outer circumference of the wheel causing a plastic strain on the circumference of the body and/or the wheel, which also results in a restriction of the normal force.

On the other hand, there are known apparatuses for longitudinally driving an elongate body (see e.g. FR-A-1.426.898 or GB-A-1.351.277), wherein there is used a pair of chains circulating about drive wheels and to which drive blocks are attached, or there are used drive blocks circulating within a guide and being driven by drive wheels. To press the drive blocks to the elongate body pressure means are provided between the drive wheels. In case of said GB-A-1.351.277 this pressure means consist of circulating balls or rollers rolling along a track, the drive blocks moving along said balls or rollers during their engagement with the elongate body. These pressure means make the apparatus very complicated, while there are many points of friction within the apparatus.

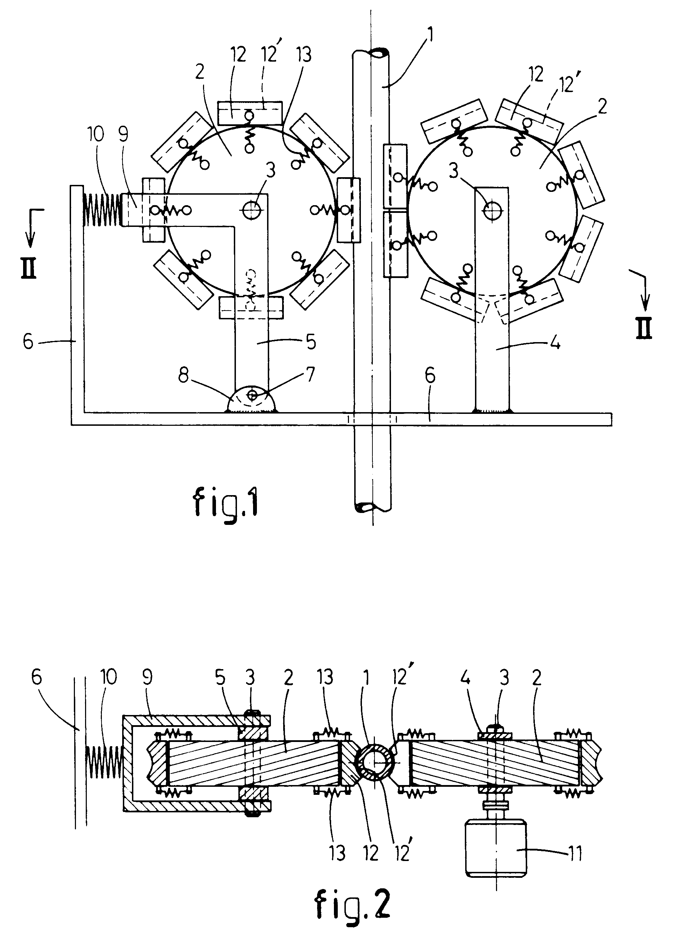

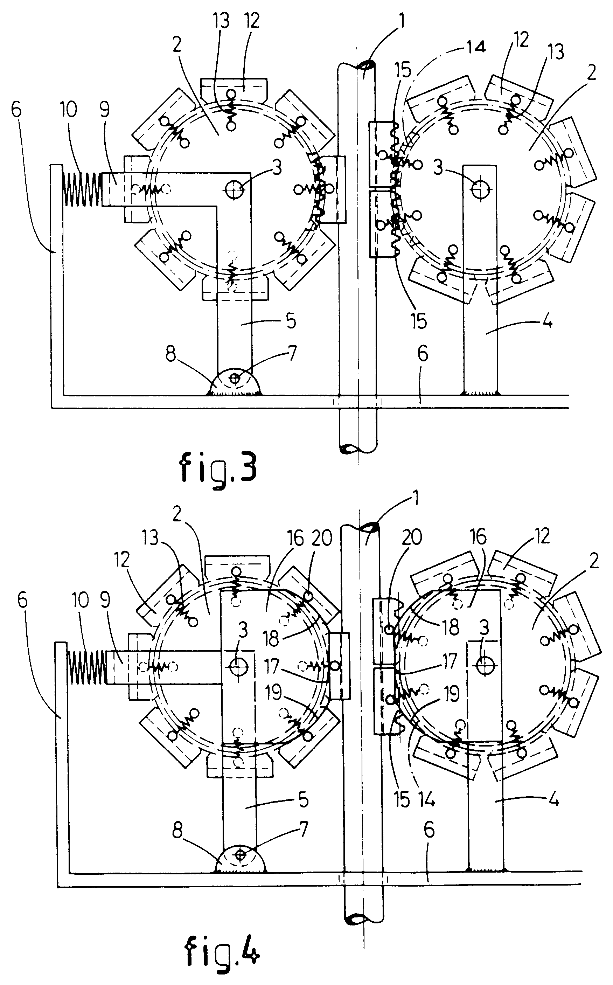

US-A-4.817.845 discloses the apparatus according to the preamble of claims 1 and 2. This prior art apparatus is intended for pulling small diameter fragile cable. The drive wheels are resilient and the intermediate pieces consist of bar assemblies entrained around the wheel. In the embodiment of Fig. 1 there are two opposed wheels clamping the elongate body and being surrounded by the bar assemblies, while in the embodiment of Fig. 3 there are two pairs of opposed wheels, the bar assemblies each being passed around a pair of wheels. Due to elastic deformation of the wheels the elongate body is clamped and a part of the circumference of the wheel is flattened so that several bars are allowed to engage the elongate body simultaneously.

It is an object of the present invention to provide an apparatus of the type mentioned in the preamble, wherein the drawbacks of the several known apparatuses are removed.

For this purpose the apparatus according to the invention is characterized by the features of the characterizing portion of claims 1 and 2.

Through the intermediate pieces it is possible to enlarge the area of contact in the longitudinal direction of the body in comparison to the direct engagement of the wheel and the elongate body, so that the normal stress is lowered for a given total normal force, or the admissible normal force is increased. Furthermore, it is no problem to adapt the configuration of the intermediate piece to the cross-section of the body to be driven, so that a body is engaged around a substantial part of its circumference as no differences in speed along the circumference of the elongate body and hence no plastic strains can set-in.

With respect to the known apparatuses having drive blocks and separate pressure means a substantial simplification is obtained because the intermediate pieces are urged to the elongate body by the wheel itself, so that the intermediate pieces do not move tangentially with respect to the surface of the pressure means and consequently sliding friction does not occur.

Due to the rolling movement of the wheel over the longitudinal surface of the driven intermediate piece, each intermediate piece may be driven parallel to the elongate body during a portion of a revolution of the wheel without requiring additional measurements to keep the distance between the axis of rotation of the wheel and the surface of engagement of the intermediate piece to the elongate body constant.

The elastic means enables a movement of the intermediate pieces with respect to the wheel on one hand, while a uniform distribution of the intermediate pieces about the wheel is insured on the other hand. The elastic means may be provided both between the wheel and the separate intermediate pieces and between the intermediate pieces themselves.

It is favourable when the wheel is provided at its circumference with a toothing or the like, the intermediate pieces being also provided on their side facing the respective wheel with a toothing or the like which is in engagement with the toothing or the like of the respective wheel in the operative position of the respective intermediate piece.

The meshing toothings or the like of the wheel and the respective intermediate pieces prevent slippage between the wheel and the intermediate pieces and increase the maximum transmissible tangential force on the intermediate pieces.

An advantageous embodiment of the invention is characterized in that there is provided a guide for the intermediate pieces next to the wheel, the guide being adapted to bring and hold the intermediate pieces into engagement with the elongate body during a part of a revolution of the wheel.

In this manner the movements of the intermediate pieces for temporarily aligning them with the elongate body on behalf of the driving are controlled by the guide.

Herein it is possible that the guide comprises cam plates disposed on either side of the wheel and having a portion parallel to the direction of movement of the body, as well as a run-on and run-off portion, and the intermediate pieces having cams cooperating with the cam plates.

The invention will hereafter be elucidated with reference to the drawing showing embodiments of the invention by way of example.

Fig. 1 is a very schematic side view of an embodiment of an apparatus for longitudinally driving an elongate body according to the invention.

Fig. 2 is a sectional view along the line II-II of fig. 1.

Fig. 3, 4, and 5 are very schematic side views corresponding to fig. 1 and showing modified embodiments of the apparatus for longitudinally driving an elongate body according to the invention.

Fig. 1 and 2 show a first embodiment for longitudinally driving an elongate body, in particular a tube 1. This apparatus is particularly intended to push into and pull out of the soil a string of rods or tubes for soil investigation, particularly logging. Of course it is also possible to use the apparatus for other purposes. For instance is it possible to use the apparatus for running-in of maintenance tools into drilling holes of oil or gas wells. The apparatus may also be used in oil exploration and drilling operations, wherein often tubes are hoisted and run-in and pipelines are sunk-down to the bottom of the sea. It is also contemplated to use the apparatus with several other industrial processes in which tubes or other elongate bodies of arbitrary cross-section have to be pushed into or pulled out of a machine or medium.

The apparatus comprises at least one, and in this case two aligned and spaced wheels 2. The wheels 2 form between them a nip for the tube 1. The wheels 2 have axes of rotation 3 lying substantially in a transverse plane of the tube 1. The wheels 2 are journalled with their rotary shafts 3 in supports 4, 5 respectively. The support 4 consisting of two standards is fixed on a stationairy frame 6. Contrary thereto the support 5 is pivotable about a pivot shaft 7 parallel to the rotary shafts 3 and being connected to the stationary frame 6 through a mounting 8. The support 5 has further a cross beam 9 to which a load means 10, in this case a helical spring, engages, the load means 10 being supported by the frame 6 and being adapted to load the respective wheel 2 in the direction to the opposite wheel 2 such that the tube 1 can be clamped between both wheels 2. Of course it is possible to use other load means rather than a helical spring 10, such as pneumatic or hydraulic jacks or the like.

At least one of the wheels, in this case the stationary supported wheel 2, may be driven by means of a suitable motor 11, possibly with an interposed transmission means.

At the circumference of both wheels 2 is disposed a plurality of uniformly spaced intermediate pieces 12, which are movably connected to the respective wheels 2. In the case shown, the intermediate pieces, which have a flat configuration at their side facing the wheel 2, may roll on the circumference of the wheel 2 wherein on either side of the wheel 2 and the respective intermediate pieces 12 springs 13, which engages to the wheel 2 on the one hand and to one of the intermediate pieces 12 on the other hand, load the intermediate pieces 12 to a central position. The force transmission between the wheel 2 and the respective intermediate pieces 12 as well as between the intermediate pieces 12 and the tube 1 takes place by means of friction and possible also microcontact.

The intermediate pieces 12 are adapted on their side 12′ facing away from the wheel 2 to the outer circumference of the tube 1 such that the intermediate pieces 12 are able to grip the tube 1 around a portion of the outer circumference thereof and possibly may fully surround the tube 1. Furthermore, the intermediate pieces 12 can also grip the tube 1 along a distance in longitudinal direction thereof corresponding to the length of the intermediate pieces 12. In this manner a substantial area of contact between the operative intermediate pieces 12 and the tube 1 and consequently between the wheels 2 and the tube 1 is created. In this way a large normal force can be exerted by the wheels 2 on the tube 1 without incurring high normal stresses to the tube 1 which would inadmissibly deform this tube 1.

As appears from fig. 1, the number of intermediate pieces 12, in this case eight, and the length thereof are chosen such that always at least one intermediate piece 12 of each wheel 2 is in engagement with the tube 1 to be driven so that always a sufficiently large driving force is exerted onto the tube 1.

Fig. 3 shows a modified embodiment of the apparatus for longitudinally driving the tube 1, wherein both wheels 2 are provided on their circumference with a toothing 14, while the intermediate pieces 12 comprise on their side facing the respective wheel 2 a rectilinealface toothing 15 meshing with the toothing 14 of the respective wheel 2. The toothings 14 and 15, preferably rolling truly on each other, may be formed over the whole width of the contact area between each wheel 2 and the respective intermediate pieces 12, but it is of course also possible to form the toothings 14 and 15 only in a portion of the width of this area and construct the remaining portion as a flat tread. Due to the provision of the toothings 14 and 15 the risk of slippage between the wheel 2 and the respective intermediate pieces 12 is eliminated, while it is also possible for the wheel 2 to exert a larger tangential force on the intermediate pieces 12.

Fig. 4 shows a further development of the apparatus for longitudinally driving the tube 1. There is provided on either side of each wheel 2 a guide for the intermediate pieces 12, which brings the intermediate pieces 12 into engagement with the tube 1 in a controlled manner. This guide consists of cam plates 16 placed on either side of each wheel 2 and being fixed to the supports 4, 5 respectively and having a portion 17 extending parallel to the direction of driving of the tube 1, as well as a run-on and run-off portion 18, 19 respectively. The intermediate pieces 12 include on both sides laterally projecting cams 20 disposed in the longitudinal center thereof and passing along the run-on and run-off portions 18 and 19 and along the straight portion 17 of the cam plates 16 when the respective wheel 2 is rotated. By means of the cam plates 16 the intermediate pieces 12 come gradually into and out of engagement with the wheel 2 on the one hand and with the tube 1 on the other hand.

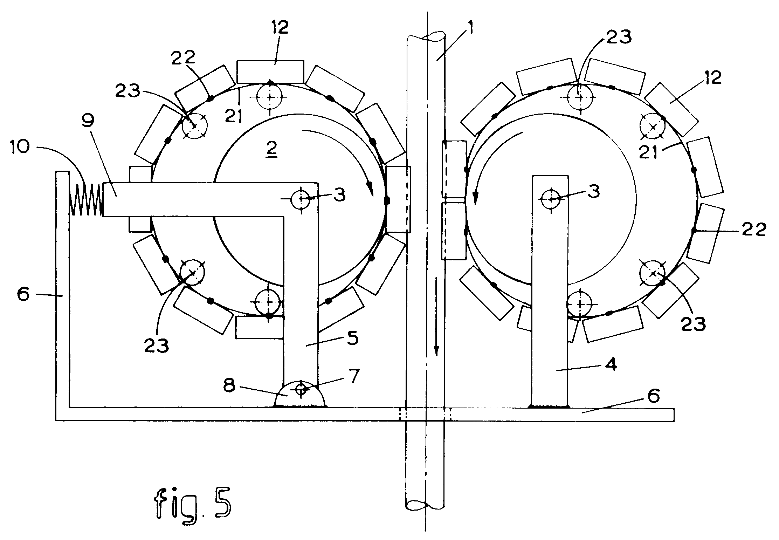

Fig. 5 shows a further embodiment of the invention, wherein the intermediate pieces 12 are not fastened to a respective wheel 2, but are interconnected by an elastically bendible element 21 or maintaining the interrelationship between the intermediate pieces 12. In the case shown the flexible element 21 consists of a steel band to which each of the intermediate pieces 12 are fixed by means of a screw 22 or an other fastening means. The length of the steel band 21 is substantially greater than the circumferential length of the respective wheel 2, while each band 21 is guided over a plurality of guide rollers 23. It is, however, also well possible to make the length of the steelband 21 only slightly larger than the circumferential length of the wheel 2, and, certainly in that case, one may work without guide rollers 23. As always at least one intermediate piece 12 is clamped between the respective wheel 2 and the elonguate body 1 there is no necessity for a connection between the intermediate pieces 12 and the wheel 2, provided that the friction between the pressed intermediate pieces and the wheel 2 is sufficient for causing the intermediate pieces 12 to circulate with the wheel 10. Of course also in this embodiment there may be provided toothings on the wheel and the intermediate pieces.

The invention is not restricted to the embodiment shown in the drawing, which can be varied within the scope of the invention. For instance it is possible to use the apparatus not only for tubes or rods having a circular outer circumference, but also for elongate bodies having a different kind of outer circumference, such as polygonal or the like. Furthermore instead of two wheels 2 a different number of wheels 2 may be used, such as three or four wheels symmetrically circumferentially spaced around the tube 1 and having axes of rotation 3 lying in the same transverseplane of the tube 1. In this case it is possible that the intermediate pieces 12 of the wheels 2 together surround the whole tube 1, whereby it is not possible that the cross-section of the tube 1 changes due to the pressure of the wheels 2.

## Claims

1. An apparatus for longitudinally driving an elongate body (1), comprising:
at least one wheel (2, 4) and oppositely disposed retaining means (2, 5), the wheel and retaining means being adapted to clamp the elongate body (1) between them, the wheel (2) having an axis of rotation (3) lying substantially in a transverse plane of the elongate body (1) and a substantially rigid circumferential surface around a circumference of the wheel (2);
means (10) for forcing the wheel and the retaining means toward each other to clamp the elongate body (1) therebetween;
driving means (11) for rotating the wheel (2);
a plurality of movably mounted intermediate pieces (12) successively positioned about and circulating with the wheel (2), each intermediate piece (12) having a longitudinal surface supported by the circumferential surface of the wheel, and wherein each intermediate piece (12) is driveably urged by the wheel (2) during engagement with the wheel and the elongate body (1) such that each intermediate piece (12) is successively driven by the wheel (2) parallel to the elongate body (1), wherein a driven portion of the longitudinal surface is defined by that portion of the longitudinal surface which is driveably engaged by a corresponding tangential surface of the wheel (2) so that the plurality of intermediate pieces transforms rotational movement of the wheel (2) into translational movement of the elongate body (1) by means of friction between each intermediate piece (12) and the elongate body (1); and
elastic means (13) holding the intermediate pieces (12) in engagement with the wheel (2), the elastic means (13) supporting each intermediate piece (12) relative to the wheel (2) and maintaining successive positioning of the intermediate pieces to the wheel, **characterized** in that the circumferential surface of the wheel (2) is substantially rigid and the elastic means, while joining each intermediate piece (12) to the wheel (2), allowing limited movement of the intermediate pieces (12) with respect to the wheel during their engagement with the elongate body (1) such that the wheel (2) is rolling on each longitudinal surface of the intermediate piece and a constant distance is maintained between the driven portion of the longitudinal surface of each intermediate piece (12) and the axis of rotation (3) of the wheel (2) during said rolling movement of the wheel (2) on the longitudinal surface.

2. An apparatus for longitudinally driving an elongate body (1), comprising:
at least one wheel (2, 4) and oppositely disposed retaining means (2, 5), the wheel and retaining means being adapted to clamp the elongate body (1) between them, the wheel (2) having an axis of rotation (3) lying substantially in a transverse plane of the elongate body (1) and a substantially rigid circumferential surface around a circumference of the wheel (2);
means (10) for forcing the wheel and the retaining means toward each other to clamp the elongate body (1) therebetween;
driving means (11) for rotating the wheel (2); a plurality of movably mounted intermediate pieces (12) successively positioned about and circulating with the wheel (2), each intermediate piece (12) having a longitudinal surface supported by the circumferential surface of the wheel, and wherein each intermediate piece (12) is driveably urged by the wheel (2) during engagement with the wheel and the elongate body (1) such that each intermediate piece (12) is successively driven by the wheel (2) parallel to the elongate body (1), wherein a driven portion of the longitudinal surface is defined by that portion of the longitudinal surface which is driveably engaged by a corresponding tangential surface of the wheel (2) so that the plurality of intermediate pieces transforms rotational movement of the wheel (2) into translational movement of the elongate body (1) by means of friction between each intermediate piece (12) and the elongate body (1); and
elastic means (21) including elastically bendable elements interconnecting the intermediate pieces (12) and maintaining successive positioning of the intermediate pieces to the wheel and to each other, **characterized** in that the circumferential surface of the wheel (2) is substantially rigid and the elastic means allowing limited movement of the intermediate pieces (12) with respect to the wheel during their engagement with the elongate body (1) such that the wheel (2) is rolling on each longitudinal surface of the intermediate piece and a constant distance is maintained between the driven portion of the longitudinal surface of each intermediate piece (12) and the axis of rotation (3) of the wheel (2) during said rolling movement of the wheel (2) on the longitudinal surface.

3. Apparatus according to claim 1 or 2, **characterized** in that the wheel (2) is provided at its circumference with a toothing (14) or the like, the intermediate pieces (12) being also provided on their side facing the respective wheel (2) with a toothing (15) or the like, which is in engagement with the toothing (14) or the like of the respective wheel (2) in the operative position of the respective intermediate piece (12).

4. Apparatus according to claim 3, **characterized** in that the toothing (14) of the intermediate piece (12) is a rectilinear face toothing.

5. Apparatus according to one of the preceding claims, **characterized** in that there is provided a guide (16-18) for the intermediate pieces (12) next to the wheel (2), the guide (16-18) being adapted to bring the intermediate pieces (12) into engagement with the elongate body (1).

6. Apparatus according to claim 5, **characterized** in that the guide (16-18) comprises cam plates (16) disposed on either side of the wheel (2) and having a portion (17) parallel to the direction of movement of the body, as well as a run-on and run-off portion (18, 19) and the intermediate pieces (12) having cams (20) cooperating with the cam plates (16).

7. Apparatus according to claim 6, **characterized** in that on each side of the intermediate piece (12) there is provided one cam (20) disposed centrally relative to the wheel in the longitudinal direction of the elongate body.

8. Apparatus according to claims 1 and 3-7, **characterized** by eight intermediate pieces (12) provided at the circumference of the wheel.

9. Apparatus according to one of the preceding claims, **characterized** in that the retaining means comprises at least one further wheel (2) provided with intermediate pieces (12), the wheels (2) being equally distributed about the circumference of the elongate body (1).

## Patentansprüche

1. Vorrichtung zum Längsvorschub eines Langkörpers (1), bestehend aus:
mindestens einem Rad (2, 4) und einer gegenüberliegenden Haltevorrichtung (2, 5), wobei Rad und Gegenrad geeignet sind, zwischen sich und einem Langkörper Reibschluß herzustellen, und wobei das Rad (2) eine Drehachse (3) hat, die im wesentlichen quer zur Längsachse des Langkörpers (1) verläuft, sowie eine starre Abrollumfangsfläche;
Vorrichtung (10) zum Andrücken des Rades und des Gegenrades, wodurch Reibschluß zwischen Rädern und Langkörper (1) hergestellt wird;
Motor (11) zum Drehen des Rads (2);
einer Reihe von beweglich montierten Zwischenstücken (12), die im gleichmäßigen Abstand am Radumfang montiert sind und sich mit dem Rad (2) drehen, wobei jedes Zwischenstück (12) eine ebene Fläche hat, die den Radumfang in einem Punkt berührt, und wobei jedes Zwischenstück (12) während des Kontakts mit dem Rad (2) und dem Langkörper (1) solcherart angetrieben wird, daß nacheinander jedes Zwischenstück (12) parallel zum Langkörper (1) angetrieben wird, wobei der angetriebene Teil der ebenen Fläche durch den Teil der ebenen Fläche definiert wird, der durch die tangentiale Berührungsfläche mit dem Rad (2) gegeben ist, wobei auf diese Weise durch die abrollenden Zwischenstücke die Drehbewegung des Rades (2) über den Reibschluß zwischen Zwischenstück (12) und Langkörper (1) in eine Translationsbewegung des Langkörpers (1) übertragen wird; und
einer Reihe von elastischen Elementen (13), über die die Zwischenstücke (12) mit dem Rad (2) verbunden sind, wobei die elastischen Elemente (13), mit denen die Zwischenstücke (13) mit dem Rad (2) verbunden sind, für die jeweils richtige Positionierung der Zwischenstücke am Radumfang sorgen; **dadurch gekennzeichnet**,
daß der Kreisumfang des Rades (2) im wesentlichen starr ist und die elastischen Elemente zwar die einzelnen Zwischenplatten (12) mit dem Rad verbinden, auf der anderen Seite jedoch eine begrenzte Bewegung der Zwischenplatten (12) in Relation zum Rad während des Kontaktes zum Langkörper (1) ermöglichen derart, daß das Rad (2) Kontakt zu der ebenen Fläche des Zwischenkörpers hat und ein konstanter Abstand zwischen dem angetriebenen Teil der ebenen Fläche jedes Zwischenteils (12) und der Drehachse (3) des Rades (2) während der Abrollbewegung des Rades (2) im Kontakt zu der ebenen Fläche eingehalten wird.

2. Vorrichtung zum Längsvorschub eines Langkörpers (1), bestehend aus:
mindestens einem Rad (2, 4) und einer gegenüberliegenden Haltevorrichtung (2, 5), wobei Rad und Gegenrad geeignet sind, zwischen sich und einem Langkörper Reibschluß herzustellen, und wobei das Rad (2) eine Drehachse (3) hat, die im wesentlichen quer zur Längsachse des Langkörpers (1) verläuft, sowie eine starre Abrollumfangsfläche;
Vorrichtung (10) zum Andrücken des Rades und des Gegenrades, wodurch Reibschluß zwischen Rädern und Langkörper (1) hergestellt wird;
Motor (11) zum Drehen des Rads (2);
einer Reihe von beweglich montierten Zwischenstücken (12), die im gleichmäßigen Abstand am Radumfang montiert sind und sich mit dem Rad (2) drehen, wobei jedes Zwischenstück (12) eine ebene Fläche hat, die den Radumfang in einem Punkt berührt, und wobei jedes Zwischenstück (12) während des Kontakts mit dem Rad (2) und dem Langkörper (1) solcherart angetrieben wird, daß nacheinander jedes Zwischenstück (12) parallel zum Langkörper (1) angetrieben wird, wobei der angetriebene Teil der ebenen Fläche durch den Teil der ebenen Fläche definiert wird, der durch die tangentiale Berührungsfläche mit dem Rad (2) gegeben ist, wobei auf diese Weise durch die abrollenden Zwischenstücke die Drehbewegung des Rades (2) über den Reibschluß zwischen Zwischenstück (12) und Langkörper (1) in eine Translationsbewegung des Langkörpers (1) übertragen wird; und
einer Reihe von elastischen Elementen (21), bestehend aus biegeelastischen Elementen, über die die Zwischenstücke (12) miteinander verbunden sind und mit deren Hilfe die aufeinanderfolgende Positionierung der Zwischenstücke auf dem Radumfang erfolgt, **dadurch gekennzeichnet,** daß der Kreisumfang des Rades (2) im wesentlichen starr ist und die elastischen Elemente eine begrenzte Bewegung der Zwischenplatten (12) in Relation zum Rad während des Kontaktes zum Langkörper (1) ermöglichen derart, daß das Rad (2) Kontakt zu der ebenen Fläche des Zwischenkörpers hat und ein konstanter Abstand zwischen dem angetriebenen Teil der ebenen Fläche jedes Zwischenteils (12) und der Drehachse (3) des Rades (2) während der Abrollbewegung des Rades (2) im Kontakt zu der ebenen Fläche eingehalten wird.

3. Vorrichtung nach Anspruch 1 oder 2, **dadurch gekennzeichnet,** daß der Umfang des Rads (2) in Form eines Zahnkranzes (14) o.ä. ausgebildet ist, wobei die Zwischenstücke (12) auf der Kontaktseite zum Rad (2) ebenfalls mit Zähnen o.ä. ausgestattet sind, die im Eingriff mit den Zähnen (14) o.ä. des entsprechendes Rades (2) stehen, wenn das entsprechende Zwischenstück in seiner Funktionsposition ist.

4. Vorrichtung nach Anspruch 3, **dadurch gekennzeichnet,** daß die Zähneanordnung des Zwischenstücks (12) geradlinig ist.

5. Vorrichtung nach einem der vorhergehenden Ansprüche, **dadurch gekennzeichnet,** daß für die Zwischenstücke (12) direkt am Rad (2) eine Führungsvorrichtung (16-18) vorgesehen ist, die dafür sorgt, daß die Zwischenstücke (12) sicheren Kontakt mit dem Langkörper (1) haben.

6. Vorrichtung nach Anspruch 5, **dadurch gekennzeichnet,** daß die Führungsvorrichtung (16-18) aus Nockenplatten (16) besteht, die auf beiden Seiten des Rades (2) angeordnet sind und aus einem parallel zur Bewegungsrichtung des Langkörpers angeordneten Teil sowie aus einem Einlauf- und Auslaufteil (18, 19) bestehen, wobei die Zwischenstücke (12) mit Nocken (20) versehen sind, die mit den Nockenplatten (16) eine Funktionseinheit bilden.

7. Vorrichtung nach Anspruch 6, **dadurch gekennzeichnet,** daß sich auf jeder Seite der Zwischenstücke (12) ein im Mittelpunkt angeordneter Nocken (20) befindet.

8. Vorrichtung nach Anspruch 1 und 3-7, **dadurch gekennzeichnet,** daß über den Umfang des Rades acht Zwischenstücke (12) angeordnet sind.

9. Vorrichtung nach einem der vorhergehenden Ansprüche, **dadurch gekennzeichnet,** daß die Haltevorrichtung aus mindestens einem weiteren Rad (2) besteht, das mit Zwischenstücken (12) ausgestattet ist, wobei die Räder (2) gleichartig um den Umfang des Langkörpers (1) herum angeordnet sind.

## Revendications

1. Appareil pour entraîner longitudinalement un corps allongé (1), comportant :
au moins une roue (2, 4) et des moyens opposés de retenue (2, 5), la roue et les moyens de retenue étant destinés à serrer entre eux le corps allongé (1), la roue (2) ayant un axe de rotation (3) s'étendant sensiblement dans un plan transversal du corps allongé (1) et une surface circonférentielle sensiblement rigide le long d'une circonférence de la roue (2) ;
des moyens (10) destinés à rapprocher à force l'un de l'autre la roue et les moyens de retenue pour que le corps allongé (1) soit serré entre eux ;
des moyens d'entraînement (11) destinés à faire tourner la roue (2) ;
plusieurs pièces intermédiaires (12) montées de façon mobile, positionnées les unes à la suite des autres autour de la roue (2) et circulant avec elle, chaque pièce intermédiaire (12) ayant une surface longitudinale supportée par la surface circonférentielle de la roue, et chaque pièce intermédiaire (12) pouvant être sollicitée en entraînement par la roue (2) pendant un engagement avec la roue et le corps allongé (1) de manière que les pièces intermédiaires (12) soient entraînées successivement chacune par la roue (2) parallèlement au corps allongé (1), une partie entraînée de la surface longitudinale étant définie par la partie de la surface longitudinale qui est engagée en entraînement par une surface tangentielle correspondante de la roue (2) de manière que les diverses pièces intermédiaires transforment le mouvement de rotation de la roue (2) en un mouvement de translation du corps allongé (1) par un frottement entre chaque pièce intermédiaire (12) et le corps allongé (1) ; et
des moyens élastiques (13) maintenant les pièces intermédiaires (12) en engagement avec la roue (2), les moyens élastiques (13) supportant chaque pièce intermédiaire (12) par rapport à la roue (2) et maintenant le positionnement les unes à la suite des autres des pièces intermédiaires sur la roue, caractérisé en ce que la surface circonférentielle de la roue (2) est sensiblement rigide et les moyens élastiques, tout en reliant chaque pièce intermédiaire (12) à la roue (2), permettent un mouvement limité des pièces intermédiaires (12) par rapport à la roue pendant leur engagement avec le corps allongé (1) de manière que la roue (2) roule sur chaque surface longitudinale de la pièce intermédiaire et qu'une distance constante soit maintenue entre la partie entraînée de la surface longitudinale de chaque pièce intermédiaire (12) et l'axe de rotation (3) de la roue (2) pendant ledit mouvement de roulement de la roue (2) sur la surface longitudinale.

2. Appareil pour entraîner longitudinalement un corps allongé (1), comportant :
au moins une roue (2, 4) et des moyens opposés de retenue (2, 5), la roue et les moyens de retenue étant destinés à serrer entre eux le corps allongé (1), la roue (2) ayant un axe de rotation (3) s'étendant sensiblement dans un plan transversal du corps allongé (1) et une surface circonférentielle sensiblement rigide le long d'une circonférence de la roue (2) ;
des moyens (10) destinés à rapprocher à force l'un de l'autre la roue et les moyens de retenue pour que le corps allongé (1) soit serré entre eux ;
des moyens d'entraînement (11) destinés à faire tourner la roue (2) ;
plusieurs pièces intermédiaires (12) montées de façon mobile et positionnées les unes à la suite des autres autour de la roue (2) et circulant avec elle, chaque pièce intermédiaire (12) ayant une surface longitudinale supportée par la surface circonférentielle de la roue, et chaque pièce intermédiaire (12) étant sollicitée en entraînement par la roue (2) pendant un engagement avec la roue et le corps allongé (1) de manière que les pièces intermédiaires (12) soient entraînées les unes à la suite des autres chacune par la roue (2) parallèlement au corps allongé (1), une partie entraînée de la surface longitudinale étant définie par la partie de la surface longitudinale qui est engagée en entraînement par une surface tangentielle correspondante de la roue (2) de manière que les pièces intermédiaires transforment le mouvement de rotation de la roue (2) en un mouvement de translation du corps allongé (1) par un frottement entre chaque pièce intermédiaire (12) et le corps allongé (1) ; et
des moyens élastiques (21) comprenant des éléments pouvant fléchir élastiquement, reliant entre elles les pièces intermédiaires (12) et maintenant le positionnement les unes à la suite des autres des pièces intermédiaires sur la roue et entre elles, caractérisé en ce que la surface circonférentielle de la roue (2) est sensiblement rigide et les moyens élastiques permettent un mouvement limité des pièces intermédiaires (12) par rapport à la roue pendant leur engagement avec le corps allongé (1) de manière que la roue (2) roule sur chaque surface longitudinale de la pièce intermédiaire et qu'une distance constante soit maintenue entre la partie entraînée de la surface longitudinale de chaque pièce intermédiaire (12) et l'axe de rotation (3) de la roue (2) pendant ledit mouvement de roulement de la roue (2) sur la surface longitudinale.

3. Appareil selon la revendication 1 ou 2, caractérisé en ce que la roue (2) comporte, à sa circonférence, une denture (14) ou analogue, les pièces intermédiaires (12) étant également pourvues, sur leur côté faisant face à la roue respective (2), d'une denture (15) ou analogue, qui est en engagement avec la denture (14) ou analogue de la roue respective (2) dans la position de travail de la pièce intermédiaire respective (12).

4. Appareil selon la revendication 3, caractérisé en ce que la denture (14) de la pièce intermédiaire (12) est une denture d'une face rectiligne.

5. Appareil selon l'une des revendications précédentes, caractérisé en ce qu'il est prévu un guide (16-18) pour les pièces intermédiaires (12) à proximité de la roue (2), le guide (16-18) étant destiné à amener les pièces intermédiaires (12) en engagement avec le corps allongé (1) ;

6. Appareil selon la revendication 5, caractérisé en ce que le guide (16-18) comporte des plaques de came (16) disposées de chaque côté de la roue (2) et ayant une partie (17) parallèle à la direction du mouvement du corps, ainsi que des parties d'entrée et de sortie (18, 19), et les pièces intermédiaires (12) ayant des cames (20) coopérant avec les plaques de came (16).

7. Appareil selon la revendication 6, caractérisé en ce qu'il est prévu, sur chaque côté de la pièce intermédiaire (12), une came (20) disposée centralement par rapport à la roue dans la direction longitudinale du corps allongé.

8. Appareil selon les revendications 1 et 3-7, caractérisé en ce que huit pièces intermédiaires (12) sont situées à la circonférence de la roue.

9. Appareil selon l'une des revendications précédentes, caractérisé en ce que les moyens de retenue comprennent au moins une autre roue (2) pourvue de pièces intermédiaires (12), les roues (2) étant réparties de façon égale autour de la circonférence du corps allongé (1).
